# EUROPEAN PATENT APPLICATION

(11) **EP 1 362 887 A1**
(43) Date of publication of application: **19.11.2003**
(21) Application number: 02254135.3
(22) Date of filing: 13.06.2002
(51) Int. Cl.: C08K 13/02

(54) **Aggregate and components made therefrom and process for making the aggregate**

(30) Priority: 14.05.2002 IN MU04312002
(71) Applicant: Himanshu, S., Mumbai 400 092 (IN)
(72) Inventor: Himanshu, S., Mumbai 400 092 (IN)
(74) Representative: Brereton, Paul Arthur

(57) **Abstract**

An aggregate for making a molded article and a method of making the aggregate is disclosed. The aggregate consists of an acrylate based resin matrix constituting not more than 60 per cent of the aggregate and anti abrasive particulate matter not greater than 45 per cent of the aggregate, a cross linking agent; a demolding agent, a thixotropic / Hydrophobic Agent approximately and Peroxides .

## Description

The invention relates to a novel process for making an aggregate, an aggregate made from the process and to a process of molding articles therefrom.

Articles that can be made from the novel aggregate in accordance with this invention include fixtures such as kitchen molded articles bathroom basins, counters for kitchens, bathtubs, shower cubicle bases and the like and other articles of a decorative or utility nature such as tiles for wall cladding and flooring.

The novel aggregate in accordance with this invention includes a curable resin matrix, which can be polymerized, and at least one anti abrasive. In accordance with one aspect of this invention there is provided a method of forming the novel aggregate and a method of molding an article in the process of aggregate development.

In the prior art, the use of a free-flowing mixture made from a solution of polymethyl methacrylate in methyl methacrylate and an filler material consisting of Silicon dioxide particles is known. In this mixture, the proportion of filler amounts to 62% to 66% by weight, and quartz is used as an anti abrasives which is previously recrystallized in a furnace to cristo-balite and then ground up so the majority of the anti abrasives particles have a size of between 5 .mu.m and 50 .mu.m.

Articles made from this material are susceptibility to visible scratch marks or to unremovable stains on the visible side of the articles.

Another aggregate known in the prior art essentially uses the same resin mix but a majority of mineral anti abrasives particles having a size of between approximately 0.1 mm and approximately 2 mm, and with the addition that the particles have an unbroken grain shape, and constitute about 50% to 85% by weight, in particular, approximately 60% to 80% by weight, of the aggregate. In the rest of this specification articles made from such an aggregate will be referred to as a molded article of the prior art.

This prior art aggregate and articles made therefrom suffer from several inherent defects, which include the following:
1. The aggregate and the articles made therefrom are significantly brittle, porous and have a relatively rough surface, particularly on the vertical walls, which in turn results in scale deposition on the articles in use made from the said aggregate. The use of mineral anti abrasives particles in significant quantities causes greater shrinking of resin for example, pure acrylic resin shrinks by 22%. Consequently, microscopic depressions are formed between the anti abrasives particles which are close to the surface which results in scale deposition of the articles made from the aggregate of the prior art.
2. The scale formed is difficult to clear.
3. Due to higher density of the base the weight of the article made from the aggregate is more and therefore :
   (a) Transportation costs are relatively high
   (b) Packing cost are high
   (c) Breakage during transport is high on rough roads due to weight impact as well as cantilever action.
   (d) The scoring resistance is not acceptable and even light pressures on the component results in visible scoring.
5. The tensile strength of the aggregate and of the article made therefrom is relatively low.
6. It has been experienced that articles made from the prior art aggregate suffer from the defect that there is a significant chance of damage to tap hole areas while tapping and because the resin is less in the socket and other areas required for clamping of the article, it results in poor griping of clamping screw in the socket.
7. The elasticity and resilience of the aggregate and the article made therefrom is relatively low, this not only results in bending of the article off a horizontal or vertical axis but even when bending is there then installation is hard, because straightening by tightening clamps is hard due to low resilience and less elasticity.
8. Due to a relatively lower quantity of resin by weight, bonding with solid particles within the aggregate is poor.
9. The surface is dull and because it is relatively rough there is a greater probability that there will be more penetration of external food and dirt particles.
10. Screwing of clamp is relatively time consuming and tedious and this also effect the life of the drill bit and screw bit.
11. The pressure vessel used as the apparatus for forming the aggregate is tedious to clean and this operation is more time consuming, since resin is less, viscosity of resin is also low.
12. Wearing of the mold is relatively significant, since a high percentage of solid particles, while mould filling cause more scratches polishing frequency of mold is high.
13. Operating range of viscosity is short under tropical conditions.
14. Machining tool life for example edge cutting tool, waste hole drilling tool, overflow-drilling tool is relatively less in the prior art articles because of the high anti abrasives content.
15. Cleaning of the articles is not easy.

This invention seeks to provide a novel aggregate with improved scoring resistance properties.

According to this invention there is provided a novel aggregate for making a molded article, said aggregate consisting of an acrylate based resin matrix constituting not more than 60 per cent of the aggregate and anti abrasive particulate matter not greater than 45 per cent of the aggregate, a majority of the anti abrasives particles having a size of between approximately 0.03 mm and approximately 0.8 mm, a cross linking agent in the region of 0.5 to 4 per cent of the aggregate; a demolding agent not greater than 0.4 per cent of the aggregate; a thixotropic / Hydrophobic Agent approximately 0.4 per cent to 0.5 percent of the aggregate and Peroxides approximately 1 to 2 per cent of the aggregate.

Typically, the said resin matrix consists of 60 to 70 per cent by weight of methyl methacrylate and 30 to 40 per cent of polymethyl methacrylate.

Typically, the anti abrasive consists of at least 0.5 per cent of silica powder.

Typically, the thixotropic agent is fumed silica.

In accordance with a preferred embodiment of this invention, the anti abrasive particles consists of particles selected from a group consisting of river sand coloured or uncoloured, sea sand, emery, carborandum, powdered agate, zirconium sands, metal powders including alumina powder, copper and brass powders or other precious, semi precious and non precious metals and naturally occurring crystalline material in particulate form and
at least 0.5 per cent of silica powder. Typically, the anti abrasive particles consists of particles between 0.3 and 0.7mm.

Typically, the cross linking agent is Trimetholol propane trimethacrylate.

A preferred composition of the aggregate according to this invention consists of resin matrix 53.98% of total aggregate, Anti abrasive is 43.18% of total aggregate, Silica Powder 0.98% of total aggregate, Thixotropic / Hydrophobic Agent - 0.45% of total aggregate, Peroxides 1.41% of total aggregate.

Typically, the peroxide is at least one from a group of peroxides consisting of di lauryl peroxide, tert-butylperbenzoate, bis-4-t-butyl cyclo hexyl peroxidicarbonate.

In accordance with another aspect of this invention there is provided a method of making an aggregate for making a molded article comprising the steps of making a syrup preparation for an acrylate resin matrix by mixing 60 to 70 per cent by weight of methyl methacrylate and 30 to 40 per cent of polymethyl methacrylate in a mixing vessel at temperatures between 30 to 35 degrees C, adding a cross linking agent such as Trimetholol propane trimethacrylate, a demolding agent such as stearic acid and peroxides to the said resin matrix mixture at a temperature between 20 to 25 degrees C and mixing the ingredients to form the syrup for the resin matrix adding anti abrasive particles of particle size of between approximately 0.03 mm and approximately 0.8 mm, majority being between 0.063 mm. to 0.8 mm to the syrup for the resin matrix gradually and under continuous stirring, adding a thixotropic agent to the mixture to obtain the said aggregate for molding articles.

Typically, in the step of making a syrup preparation, polymethyl methacrylate is added gradually to the methyl methacrylate under continuous stirring and controlled temperature.

The method of making the aggregate of the invention is as follows :
The method involves as an initial step Syrup Preparation in a Mixing Vessel. Typical ingredients in the syrup include
(a) MMA - 63% of total syrup
(b) PMMA - 37% of total syrup
The following additives may advantageously be added to the syrup in accordance with the method of this invention:
Addition of Cross Linking Agent in Syrup - 2% of Syrup.
Addition of Internal Demoulding Agent/ Lubricating Agent in Syrup - 0.5% of syrup.
A typical aggregate preparation in accordance with this invention includes the following ingredients:
Base Batch Preparation in small mixing pressure vessels
(a) Syrup - 53.98% of total charge
(b) Anti abrasive - 43.18% of total charge
(c) Silica Powder - 0.98% of total charge
(for better bonding larger particles of anti abrasive helps in decreasing pin holes & pitting)
(d) Thixotropic / Hydrophobic Agent - 0.45%
(e) Peroxides as curing agents - 1.41%

A typical Process in accordance with this invention can be exemplified as follows:
1. Syrup Preparation MMA is introduced in a mixing vessel. PMMA in powder/granule form is added gradually with continuous stirring at around 240 r.p.m. Temperature is maintained at about 40° C during syrup preparation. Mixing time is 6Hrs. After mixing the syrup is required to stand and the temperature is maintained at 20 to 25 ° C.
2. After syrup preparation is over and temperature 20 - 25 ° C is attained, cross-linking agent is added and stirring for 1 Hr is done.
3. Then, Internal Demolding / Lubricating Agent (Stearic Acid) is added and stirred for another 1 Hr.
4. Base Batch Preparation:

Depending on various colours required in the article to be formed the batch preparation is done in pressure vessels, as follows :
(a) Syrup with Cross Linking Agent & Demolding Agent is taken in pressure vessel
(b) Then anti abrasives are added in pressure vessel and mixed.
(c) Silica Powder is then added and mixed
(d) Thixotropic Agent Hydrophobic Agent is (Fumed Silica) added and mixed.
(e) Then peroxides are added

Total mixing time is 1 Hrs and during above operation cooling water at 15 to 20°C is continuously circulated in the jacket. After this vacuum of 600 mm is applied for 15 minutes along with mixing.
6. Then pressure vessel is moved to casting bay, where air pressure of 5 to 6 kg/Cm is applied for transferring the material from vessel to mold.
7. After transferring the material to mold the heating of molds is done at a predetermined set cycle.

| | | | | | | | | |
|---|---|---|---|---|---|---|---|---|
| Top Time | 0 | 3 | 7 | 11 | 18 | 22 | 24 | 26 |
| Temp. | 30 | 30 | 60 | 70 | 20 | 100 | 60 | 40 |
| End | | | | | | | | |
| Bottom Time | | 0 | 1 | 26 | | | | |
| Temp | | 20 | 90 | 110 | End | | | |

Filling is done at 20 ° C. Pressure of 6 Kg/Cm to 8 Kg is applied to Mold after filling. This is continued till temp. cycle is over.
8. After cycle is completed air pressure is released and clamps opened. Then top-ejecting air is applied to release top mold sticking to the article. It is then lifted and bottom air ejectors is applied to separate article from the bottom mold. During above period temperature of bottom mold is kept at 60 - 80 ° C for easy release.
9. After casting the article is clamped on a fixture and placed in stress relieving chambers here the temperature is brought down gradually at 10 ° C / hr

After cooling is complete the flashes are machined out.

A variety of thixotropic agents can be applied to the mixture; with acrylic resin, a portion of polymethyl methacrylate dissolved in methyl methacrylate works as a thixotropic agent, other known and unknown substances such as, for example, fumed silica can be used.
The anti abrasives can be particulate material of the mineral or metal type of particle size predominately in the 0.03 to 0.8 mm range and the total content of the anti abrasives should not exceed 45 per cent of the aggregate.
Thus, it is possible to achieve a substantial improvement over the prior art aggregate by choosing the composition of an article of the kind such that the majority of the mineral or metal anti abrasives particles have a size of between approximately 0.03 mm and approximately 0.8 mm, that the anti abrasives constitutes less than 45% by weight, of the aggregate compound, and in the areas of the article subject to severe stress during use, the packing density of the anti abrasives particles, i.e., the anti abrasives proportion of the aggregate is greater on the working surface of the article.

Viscosity of the mixture to be introduced into the mold depends on the ambient temperature and syrup ingredients. It is preferred that the anti abrasives particles settle towards the bottom wall of the mold cavity. The mold cavity may be cooled to approximately 20 to 25 degrees C whilst introducing the mixture so that it remains thixotropic before and while it is introduced, but, at the same time, permits the anti abrasives particles to settle in the mould before curing since the viscosity decreases as a result of the temperature. Once the polymerization process starts, the level of viscosity increases drastically, thus terminating the sedimentation of the anti abrasives.

The anti abrasive particles may be advantageously river sand coloured or uncoloured, sea sand, emery, carborandum, powdered agate, zirconium sands, metal powders including alumina powder, copper and brass powders or other precious, semi precious and non precious metals and naturally occurring crystalline material in particulate form.

In accordance with a preferred embodiment of this invention it is desirable that the anti abrasives particles follow a grading curve with the majority of the anti abrasives particles having a size of between approximately 0.03 mm and approximately 0.8 mm and typically between 0.3 and 0.7mm.

In use, articles according to the invention in which the resin base consists of polymethyl methacrylate are advantageous; however, polyesters, polyurethanes and epoxy resins are also useable.

Articles made from the novel aggregate envisaged in accordance with this invention have the following among other advantages:
The articles are less Brittle and less Porous. The scale deposition is less due to less porosity and decreased roughness. Scale formed is easily removed. Vertical walls are smooth and shining which gives excellent appearance and scale deposition is not there. Because of less density of base, weight of article is less and so transport cost will be less and packing cost will be low. Further, breakage during transport will be low on rough roads due to wt. impact on bottom of article as well as because of the fact that cantilever action decreases causing less breakage. The tensile strength is more and further chances of damage to tap hole area while tapping are decreased. There is more resin in the socket, so better griping of clamping screw in socket. There is more elasticity, hence even when bending is there then installation is easy, because straightening by tightening clamps is easy due to more elasticity. Due to high content of resin, bonding with solid particles is good. The surface being more smooth penetration of food, dirt particles will be less. Screwing of clamp is less time consuming and life of drill bit and screw bit (tools for clamp screwing) is increased. The over all product is more hygienic. It has been proposed that by addition of a bioactive quantities of an antifungal agent such as griseofulvin it is possible to prevent the growth of fungii and other cultures on the articles made from this aggregate.

Pressure vessel cleaning is easy since resin is more and its viscosity is also high. The wearing of mold is less as compared to existing process, since higher resin percentage develop less scratches. And so polishing frequency of mold is decreased. Operating range of viscosity is more under tropical conditions. Machining tool life e.g. Edge cutting tool, waste hole drilling tool overflow drilling tool will be more in the article according to this invention due to higher resin content. Article made from the aggregate in accordance with this invention can be cleaned easily.

Following defect are decreased in the article in manufacturing:
(a) Pin holes(b) Pitting (c )white patch marks (d) Flow marks, Hence rework and rejection due to above defects will decrease

The articles made according to the invention virtually never get stained during use when they come into contact with dyes, fats or oils, alkaline solutions, acids and the like. Moreover, no so-called water whitening effect occurs, even in the case of alternating exposure to hot and cold water. This feature, in addition to the fact that the articles according to the invention almost never get stained, applies even in those cases where the resin layer coating the anti abrasives particles close to the surface has been partially or completely removed by abrasion on the working surface area.

The invention will now be described with reference to the accompanying examples:

### Example 1

First syrup preparation was done as follows:

In a mixing vessel of Stainless Steel 304 capacity 80 lit. 34.22 kg of MMA was taken. Then 18.43 kgs of PMMA was added gradually in 15minutes. The temperature was maintained at 30-35°C by circulating cooling water in jacket. Through mixing was done to dissolve PMMA. The Speed of the mixture was maintained at 70 rpm. Total mixing time was 6 hrs.

After mixing temperature was maintained at 20-25°C circulating chilled water in jacket. Then 0.8 kgs of cross linking agent was added to above syrup and stirred at 70 rpm for 1hr. Temperature was continuously maintained at 20.25°C. then internal demolding agent 0.1 kg of stearic acid was added. It was mixed for Hr. in above syrup at 70 rpm speed. Temperature was maintained at 20-25°C.

Then 51 kgs matrix batch was prepared as follows for making the aggregate 27.5 kgs of above syrup with cross linking and demolding / lubricating agent was taken in pressure vessel provided with stirrer for mixing and jacket for maintaining temperature at 15-20°C by circulating chilled water. Capacity of pressure vessel was 60 lit. 0.7 kgs. of peroxides, was added in the pressure vessel and mixed with syrup for 10 min. at 30 rpm. Speed of stirrer. 22.0 kgs of mixed anti abrasive particles of different colors with 95% particle size between 0.063 mm. to 0.8 mm. was added gradually in 10 min. through the hopper. The speed of stirring while addition of anti abrasives was maintained at 70 rpm. Thereafter it was increased to 140 rpm. Then 0.5 kgs of powder silica(240 mesh) and 0.3 kgs of fumed silica was added. Then for thorough mixing speed was maintained for 10 min. The above aggregate thus prepared was then used for casting product as follows :

Preparation of Mold: Mold was first cleaned by blowing air. Then top mold was brought down hydrostatically and allowed to rest on bottom mold. Top and bottom molds were hold together by clamps operated pneumatically. Thickness clamps were applied to maintain thickness of molded article. Thickness setting clamps were applied only after applying pressure (4kg/cm2) from bottom to bottom mold since top mold is held firm with bottom mold. The pressure causes bottom mold to rise and then when desired thickness is achieved the thickness clamps are applied for maintaining this thickness.

After thickness setting clamps are applied the pressure from bottom is released.

Molding operation : Pressure vessel with the aggregate was taken to the casting bag. It was then connected to the mold with flexible pipe. The mold was then titled vertically. Then air pressure of 6 kg/cm2 was applied in pressure vessel for transferring the aggregate to mold. When the mold was being filled with aggregate air came out from venting valve / outlet valve of mold. The moment aggregate started flowing out from venting / outlet valve, the inlet and outlet valves of mold were closed. Also the outlet valve of pressure vessel was closed. Air supply to pressure vessel was stopped. And mold was tilted back to horizontal position. The air connection to pressure vessel was disconnected, and also flexible pipe connected to mold and pressure vessel disconnected. While filling the mold the temperature of top mold was 20°C and bottom mold was 30°C. Then following temperature cycle was maintained in top and bottom mold through control panel. This temperature cycle was preset in control panel for maintaining temperature in top and bottom molds as desired.

Top mold temperature cycle.

| | | | | | | | | |
|---|---|---|---|---|---|---|---|---|
| Time 31 | 0 | 3 | 7 | 11 | 15 | 18 | 23 | 28 |
| Set Temp 70 | 20 | 20 | 30 | 35 | 60 | 80 | 100 | 100 |
| Actual 72 | 20 | 20 | 29 | 36 | 62 | 82 | 102 | 102 |

### Temperature was in degrees celsius

Bottom mold temperature cycle

| | | | |
|---|---|---|---|
| Time, min | 0 | 1 | 31 |
| Set Temp | 30 | 100 | 100 |
| Actual Tem 28 | 80 | 102 | end |

Air pressure of 6 kg cm2 was applied maintained (at bottom of mold) throughout this temperature cycle.

On completion of temp cycle air pressure applied at bottom of mold was released. Then mold clamps were opened. And top air ejector was applied to released top mold sticking to molded article. Top mold was then lifted and bottom air ejectors were applied to lift molded article from mold. Slight hammering with plastic hammer was done on material above ejector points. During demolding temperature of bottom mold was kept of 80°C.

After demolding the molded article was put on fixture where pressure was applied through a clamp. Reverse bending of 27 mm was maintained till the molded article cooled to room temperature.

Machining operation were carried out on this molded article next day. First the waste hole drilling was done on drill machine with diamond tools. Then the side flashes were removed. For this the molded article was clamped on flat wooden fixture and then machined on router machine with help of diamond cutting tool. Drilling and clamping of nylon clamps on socket of molded article was then done.

### Example 2

First syrup preparation was done as follows:

In a mixing vessel of Stainless Steel 304 capacity 80 lit. 34.22 kg of MMA was taken. Then 18.43 kgs of PMMA was added gradually in 15 minutes. The temperature was maintained at 30-35°C by circulating cooling water in jacket. Thorough mixing was done to dissolve PMMA. The Speed of the mixture was maintained at 70 rpm. Total mixing time was 6 hrs.

After mixing temperature was maintained at 20-25°C circulating chilled water in jacket. Then 0.8 kgs of cross linking agent was added to above syrup and stirred at 70 rpm for 1hr. Temperature was continuously maintained at 20.25°C. then internal demolding agent 0.13 kg of stearic acid was added. It was mixed for 1 Hr. in above syrup at 70 rpm speed. Temperature was maintained at 20-25°C.

Then 51 kgs matrix batch was prepared as follows for making the aggregate 27.5 kgs of above syrup with cross linking and demolding / lubricating agent was taken in pressure vessel provided with stirrer for mixing and jacket for maintaining temperature at 15-20°C by circulating chilled water. Capacity of pressure vessel was 60 lit. 0.4 kgs. of peroxides, was added in the pressure vessel and mixed with syrup for 10 min. at 30 rpm. Speed of stirrer. 22.0 kgs of mixed anti abrasive particles of different colors with 95% particle size between 0.063 mm. to 0.8 mm. was added gradually in 10 min. through the hopper. The speed of stirring while addition of anti abrasives was maintained at 70 rpm. Thereafter it was increased to 140 rpm. Then 0.5 kgs of powder silica(240 mesh) and 0.3 kgs of fumed silica was added. Then for through mixing speed was maintained for 10 min. The above aggregate thus prepared was then used for casting product as follows :

Preparation of Mold: Mold was first cleaned by blowing air. Then top mold was brought down hydrostatically and allowed to rest on bottom mold. Top and bottom molds were hold together by clamps operated pneumatically. Thickness clamps were applied to maintain thickness of molded article. Thickness setting clamps were applied only after applying pressure (4kg/cm2) from bottom to bottom mold since top mold is held firm with bottom mold. The pressure causes bottom mold to rise and then when desired thickness is achieved the thickness clamps are applied for maintaining this thickness. After thickness setting clamps were applied the pressure from bottom was released.

Molding operation : Pressure vessel with the aggregate was taken to the casting bag. It was then connected to the mold with flexible pipe. The mold was then titled vertically. Then air pressure of 6 kg/cm2 was applied in pressure vessel for transferring the aggregate to mold. When the mold was being filled with aggregate air came out from venting valve / outlet valve of mold. The moment aggregate started flowing out from venting / outlet valve, the inlet and outlet valves of mold were closed. Also the outlet valve of pressure vessel was closed. Air supply to pressure vessel was stopped. And mold was tilted back to horizontal position. The air connection to pressure vessel was disconnected, and also flexible pipe connected to mold and pressure vessel disconnected. While filling the mold the temperature of top mold was 20°C and bottom mold was 30°C. Then following temperature cycle was maintained in top and bottom mold through control panel. This temperature cycle was preset in control panel for maintaining temperature in top and bottom molds as desired.

Top mold temperature cycle.[Temperature was in degrees celsiusl

| | | | | | | | | |
|---|---|---|---|---|---|---|---|---|
| Time 31 | 0 | 3 | 7 | 11 | 15 | 18 | 23 | 28 |
| Set Temp 60 | 20 | 25 | 35 | 40 | 60 | 80 | 100 | 100 |
| Actual 62 | 20 | 24 | 36 | 42 | 62 | 82 | 102 | 102 |

### Bottom mold temperature cycle

| | | | |
|---|---|---|---|
| Time, min | 0 | 1 | 31 |
| Set Temp | 30 | 100 | 100 |
| Actual Tem 28 | 80 | 102 | end |

Air pressure of 6 kg cm2 was applied maintained (at bottom of mold) throughout this temperature cycle.

On completion of temp cycle air pressure applied at bottom of mold was released. Then mold clamps were opened. And top air ejector was applied to released top mold sticking to molded article. Top mold was then lifted and bottom air ejectors were applied to lift molded article from mold. Slight hammering with plastic hammer was done on material above ejector points. During demolding temperature of bottom mold was kept of 80°C.

After demolding the molded article was put on fixture where pressure was applied through a clamp. Reverse bending of 27 mm was maintained till the molded article cooled to room temperature.

Machining operation were carried out on this molded article next day. First the waste hole drilling was done on drill machine with diamond tools. Then the side flashes were removed. For this the molded article was clamped on flat wooden fixture and then machined on router machine with help of diamond cutting tool. Drilling and clamping of nylon clamps on socket of molded article was then done.

Articles made in accordance with examples 1 and 2 were taken up for Inspection:

On completion of all operations the molded article was inspected for visual defects. Following were the observations:
No pin holes were observed on show face.
No white patch marks were observed on show face.
No flow mark i.e. segregation of aggregate was present on showface.No pitting was observed on show face.

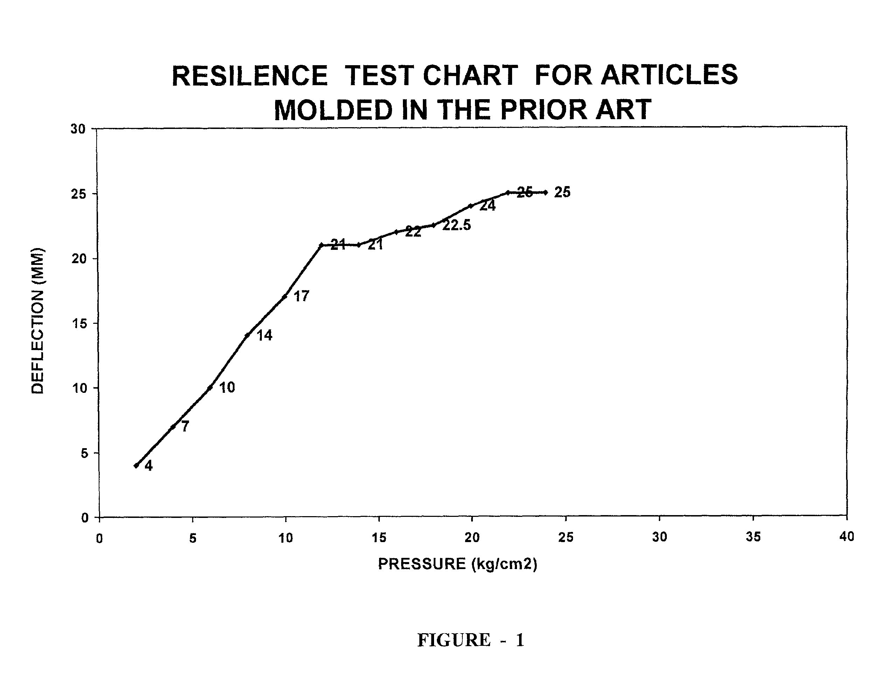

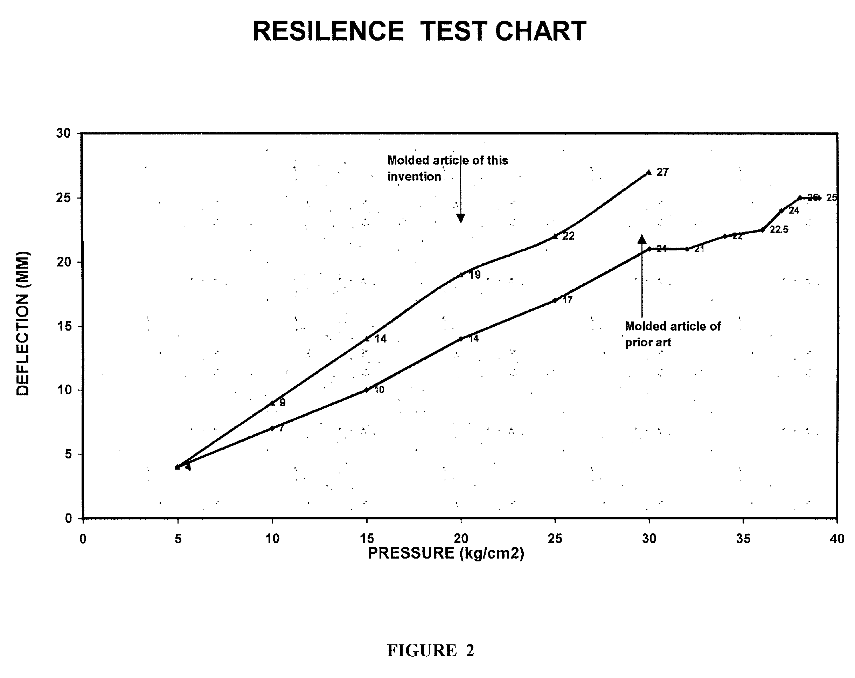

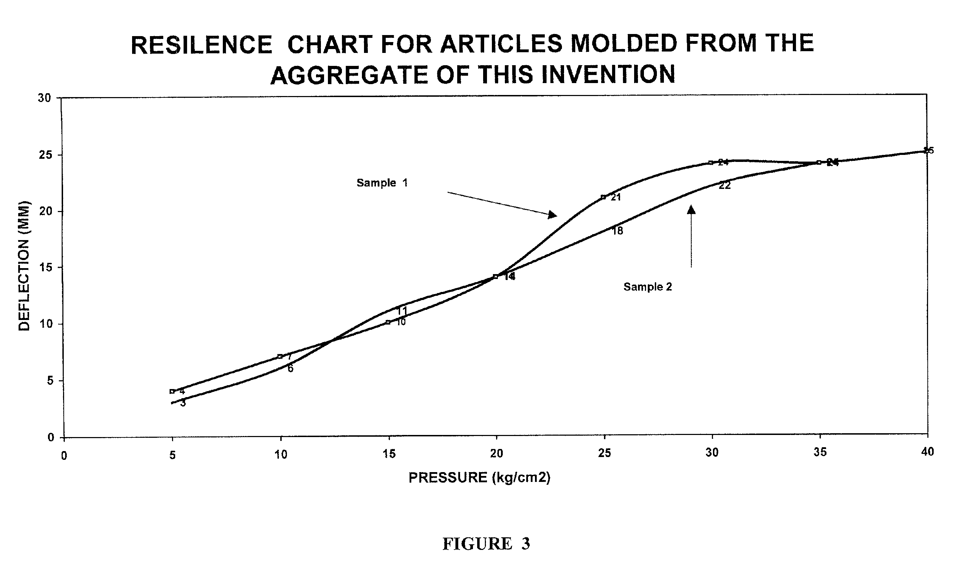

Articles molded using the aggregate of this invention and using the process of forming the aggregate in accordance with this invention were tested for it various qualities as compared with a standard article in accordance with aggregate of the prior art. The results can be summarized as under: Articles having a flat planar member were tested for resilience by applying pressure in an operative vertical direction and noting deflection and angle of deflection. In the prior art articles, pressures were applied in a range of 20 kg/ sq cm to 40 kg per sq cm in steps of 5 kg incremental. The vertical deflection in millimeters ranged from 16 mm for 20 kg to 32 mm for 35 kg. The planar member sheared off at 39 kg per sq cm pressure. The angles of deflection ranged from 2.29 degrees to 4.57 degrees. Under identical conditions tests were carried out on the samples of the molded articles made using he aggregate of this invention. The vertical deflection in millimeters ranged from 4 mm for 5 kg to 25 mm for 40 kg. The planar member sheared off at 44 kg per sq cm pressure. The angles of deflection ranged from 0.5 degrees to 3.6 degrees. Various trials conducted showed that the shearing of the planar member occurred consistently at higher pressures and the angular deflection of the planar member was significantly less. The deflection to applied pressure readings are graphically illustrated in the graphs of figures 1, 2 and 3 of the accompanying drawings.

### Test for scratch resistance [scoring]

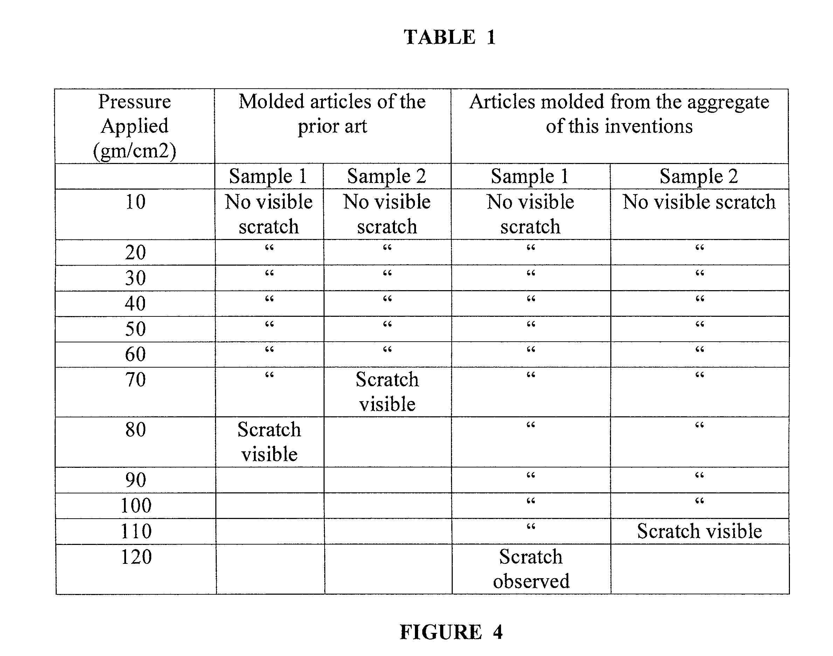

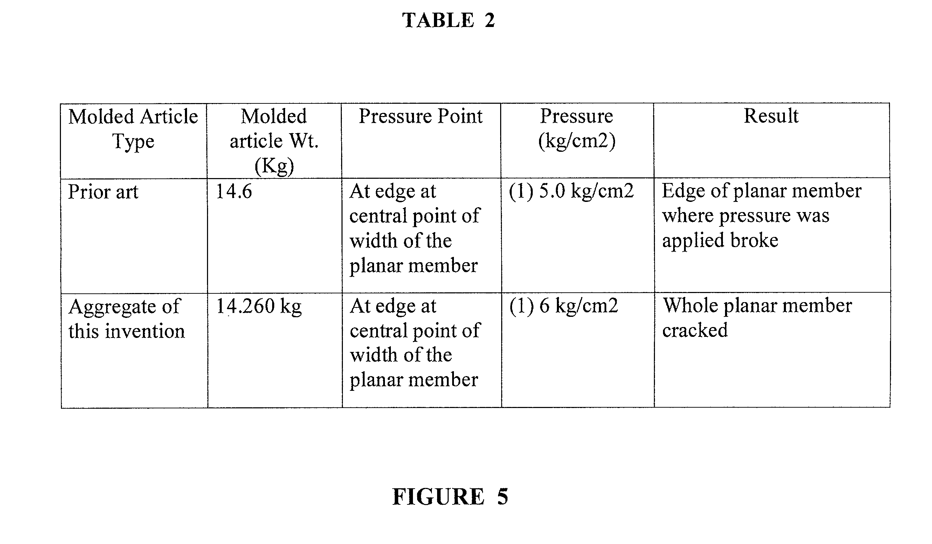

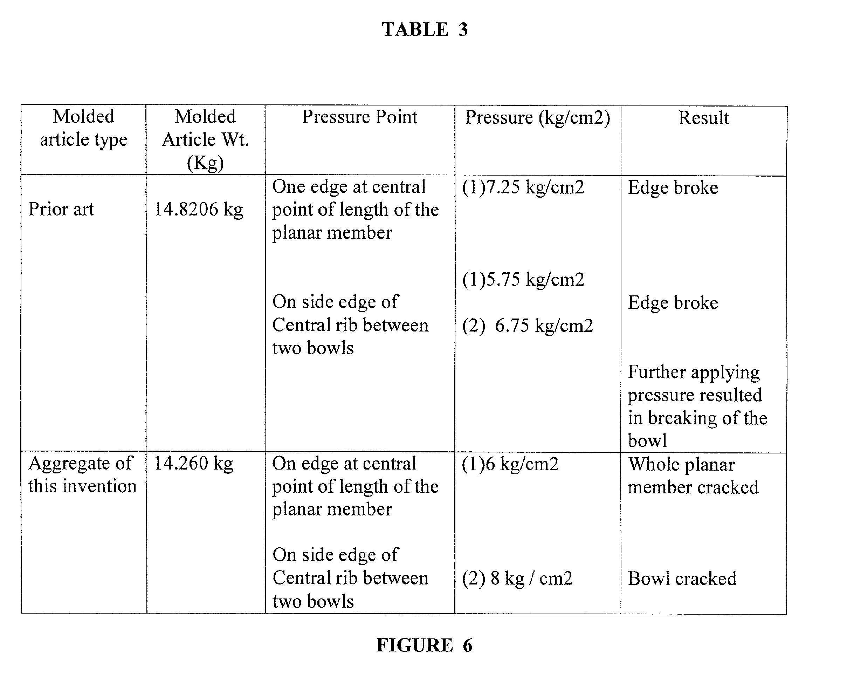

Test Method :
1. SS 304 bar of 12 mm. Diameter is fitted on the chuck of the lathe.
2. The end of bar is tapered at 30 degree into fine point of 0.25 mm. Diameter
3. The sample piece on which scoring test is to be done is fitted on the tool post of lathe (sample size 50 mm X mm). Surface of sample piece has to be at perfect right angles to SS 304 bar point
4. Pressure gauge is fixed on the saddle of the lathe bed. Pressure gauge is contacted with tool post for measuring the pressure applied on sample piece through SS 304 bar point
5. SS 304 bar point is touched with surface of sample piece ie. At 0 pressure.
6. Cross slide is moved at 0.3 mt./min rate cross wise.
7. Pressure is applied on sample piece against SS 304 bar point by moving saddle.
8. Gradually pressure is increased starting from zero at intervais of 10 gm/cm2.
9. The pressure at which scratch is observed is recorded as point of appearance of scratch on surface.
The test results are shown in table 1 in figure 4 of the accompanying drawings.:
Conclusion : Results show that scratch resistant properties of articles molded from the aggregate of this invention are better than that of articles molded in the prior art.
CRUSHING TEST RESULTS [length wise]
Test Method : Molded article is placed on surface plate upside down. One edge is resting against fixture which prevents molded article to slide when pressure across the length is applied from opposite edge. The pressure at which breaking occurs is the crushing strength (lengthwise) of molded article. The results are shown in figure 5 table 2. Results :Breaking of molded article in prior art is at 5 kg/ cm2 and in accordance with this invention is at 6kg/cm2.
CRUSHING TEST RESULTS (Widthwise) Test Method Molded article is placed on surface plate upside down.
   One edge is rested against fixture which prevents molded article to slide when pressure across the width is applied from opposite edge. The pressure at which breaking occurs is the crushing strength (widthwise) of molded article. The test results are shown in table 3 of figure 6. Results show that the Average . Edge breaking in the molded article of the prior art is at 6.5 kg/cm2. Average edge breaking in the molded article according to this invention is at 6kg/cm2. breaking of molded article (rib) at central rib between bowls elements in the molded article of the prior art is at 5.75 kg/cm2 and in accordance with this invention is at 8kg/cm2. Normally breaking during transport is at this point.

While considerable emphasis has been placed herein on the structures and structural interrelationships between the component parts of the preferred embodiments, it will be appreciated that many embodiments can be made and that many changes can be made in the preferred embodiments without departing from the principals of the invention. These and other changes in the preferred embodiment as well as other embodiments of the invention will be apparent to those skilled in the art from the disclosure herein, whereby it is to be distinctly understood that the foregoing descriptive matter is to be interpreted merely as illustrative of the invention and not as a limitation.

## Claims

1. An aggregate for making a molded article, said aggregate consisting of an acrylate based resin matrix constituting not more than 60 per cent of the aggregate and anti abrasive particulate matter not greater than 45 per cent of the aggregate, a majority of the anti abrasives particles having a size of between approximately 0.03 mm and approximately 0.8 mm, a cross linking agent in the region of 0.5 to 4 per cent of the aggregate; a demolding agent not greater than 0.4 per cent of the aggregate; a thixotropic / Hydrophobic Agent approximately 0.4 per cent to 0.5 percent of the aggregate and Peroxides approximately 1 to 2 per cent of the aggregate.

2. An aggregate for making a molded article, as claimed in claim 1, in which the said resin matrix consists of 60 to 70 per cent by weight of methyl methacrylate and 30 to 40 per cent of polymethyl methacrylate

3. An aggregate for making a molded article, as claimed in claim 1, in which the anti abrasive consists of at least 0.5 per cent of silica powder.

4. An aggregate for making a molded article, as claimed in claim 1, in which the thixotropic agent is fumed silica.

5. An aggregate for making a molded article, as claimed in claim 1, in which the anti abrasive particles consists of particles selected from a group consisting of river sand coloured or uncoloured, sea sand, emery, carborandum, powdered agate, zirconium sands, metal powders including alumina powder, copper and brass powders or other precious, semi precious and non precious metals and naturally occurring crystalline material in particulate form. at least 0.5 per cent of silica powder.

6. An aggregate for making a molded article, as claimed in claim 1, in which the anti abrasive particles consists of particles between 0.3 and 0.7mm.

7. An aggregate for making a molded article, as claimed in claim 1, in which the cross linking agent is Trimetholol propane trimethacrylate.

8. An aggregate for making a molded article, as claimed in claim 1, in which the resin matrix is 53.98% of total charge, Anti abrasive is 43.18% of total charge, Silica Powder 0.98% of total charge, Thixotropic / Hydrophobic Agent - 0.45%, Peroxides 1.41%.

9. An aggregate for making a molded article, as claimed in claim 1, in which the peroxide is at least one from a group of peroxides consisting of di lauryl peroxide, tert-butylperbenzoate, bis-4-t-butyl cyclo hexyl peroxidicarbonate.

10. A method of making an aggregate as claimed in any one of the preceding claims , for making a molded article comprising the steps of making a syrup preparation for an acrylate resin matrix by mixing 60 to 70 per cent by weight of methyl methacrylate and 30 to 40 per cent of polymethyl methacrylate in a mixing vessel at temperatures between 30 to 35 degrees C, adding a cross linking agent such as Trimetholol propane trimethacrylate, a demolding agent such as stearic acid and peroxides to the said resin matrix mixture at a temperature between 20 to 25 degrees C and mixing the ingredients to form the syrup for the resin matrix adding anti abrasive particles of particle size of between approximately 0.03 mm and approximately 0.8 mm, majority being between 0.063 mm. to 0.8 mm to the syrup for the resin matrix gradually and under continuous stirring, adding a thixotropic agent to the mixture to obtain the said aggregate for molding articles.

11. A method as claimed in claim 10 of making an aggregate for making a molded article, in which in the step of making a syrup preparation, polymethyl methacrylate is added gradually to the methyl methacrylate under continuous stirring and controlled temperature.
